# EUROPEAN PATENT APPLICATION

(11) **EP 2 709 285 A1**
(43) Date of publication of application: **19.03.2014**
(21) Application number: 13174244.7
(22) Date of filing: 28.06.2013
(51) Int. Cl.: H04B 5/00, H01F 38/14, H02M 1/12, H02M 1/42, H02J 5/00, H02J 7/02

(54) **A method of and receiver for communication during wireless power transmission**

(30) Priority: 17.09.2012 EP 12184661
(71) Applicant: ST-Ericsson SA, 1228 Plan-les-Ouates (CH)
(72) Inventor: Rapakko, Harri, 90130 Oulu (FI); Lintonen, Mikko, 90540 Oulu (FI); Pessa, Marko, 90540 Oulu (FI)
(74) Representative: Kemp, Paul Geoffrey

(57) **Abstract**

In a wireless power charger a receiver (6) is inductively coupled to a transmitter (1) to receive power for charging an accumulator in a device (11). The receiver (6) communicates charging data to the transmitter (1) by imposing current pulses across the direct current output terminals of a rectifier (9) in the receiver. To enhance the performance of the receiver without reducing the signal to noise ratio of the current pulse receiver to transmitter communication the shape of unwanted transient currents in a filter capacitor (10) are sensed and the transient current shape added to an ideal rectangular step function pulse shape to produce a communication pulse shape. As a result the communication pulse shape seen at a secondary inductor (7) of the receiver closely approximates the ideal rectangular step function shape desired whereby the signal to noise ratio is kept high.

The receiver is particularly useful in mobile devices such as cell phones, tablet PC's and laptops.

## Description

### TECHNICAL FIELD

The present invention concerns communication between a receiver and transmitter during inductive wireless transmission of electric charge from the transmitter to the receiver.

### BACKGROUND

The Wireless Power Consortium (WPC) publishes the specification: "System Description Wireless Power Transfer Volume I: Low Power Part 1: Interface Definition" at (http://www.wirelesspowerconsortium.com). Chapter 6 "Communication Interface" is of particular relevance to this application and versions of this specification predating this application are incorporated herein, in their entirety, by reference. The following discussion of the prior art reiterates some of the most relevant parts of the specification.

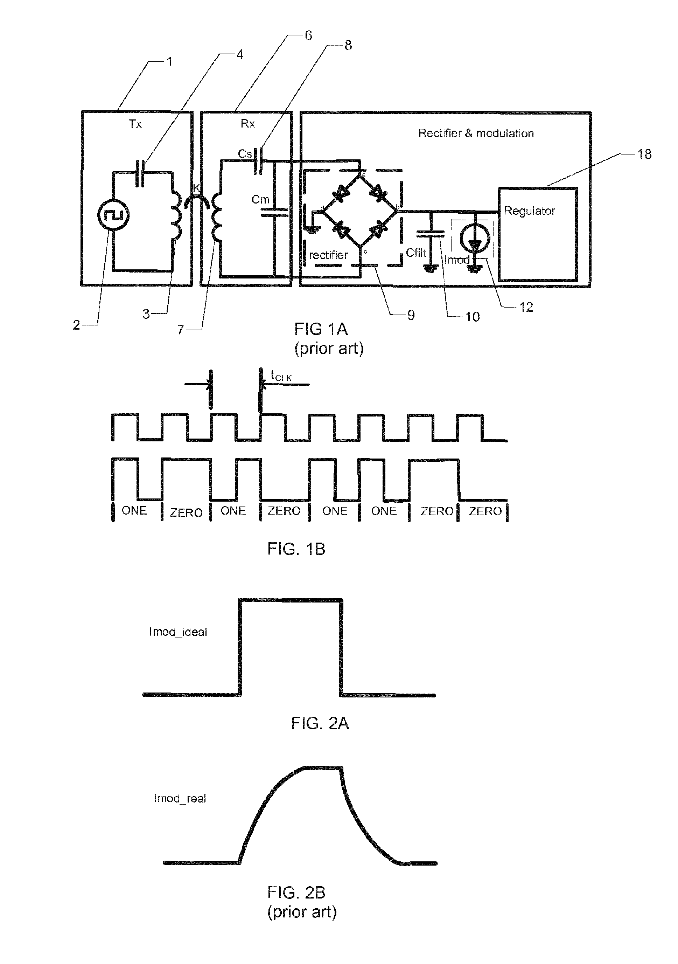

Figure 1A illustrates a prior art transmitter and receiver. A transmitter 1 (Tx) is provided with a power supply 2 which drives AC current through a circuit including a primary inductor 3 (Lp) and a capacitor 4 (Cp). The transmission circuit is modulated by a modulator (shown in the WPC specification) comprising an arrangement of switches which control the power transmitted. The power supply 2 will commonly be a generator, for example, of a power distribution grid, or electric circuit of a motor vehicle, into which the transmitter is plugged in well-known manner. Thus the power supply is temporarily coupled to the transmitter and will not ordinarily form an integral part of the transmitter.

A receiver 6 (Rx) may be included within a device, often a portable device such as a cell phone, tablet or laptop in order to provide electric charge to an accumulator which will commonly be a chemical cell. When sufficiently close to the transmitter a secondary inductor 7 is inductively coupled to the primary inductor 3 so that alternating current is induced in a receiving circuit which includes a capacitor 8 (Cs) via which AC current is delivered to a full wave rectifier 9. The rectifier 9 delivers DC current to a charger 18 and hence to the accumulator in the cell phone 11.

In order to optimise the endurance and capacity of the accumulator it is desirable to vary the power delivered to the cell over the duration of the charging process. To achieve this the transmitter 1 has a controller that controls the power supplied to the primary inductor by means of the modulator. However, to achieve this control information as to the instant state of the accumulator and charging circuit must be communicated to the transmitter controller from the receiver 6.

The standard specifies that communication is to be done using current pulses superimposed on one or more power carrying signals. These pulses are either 250µs or 500µs long to encode the information as a binary message according to the duration of each pulse. In practice, the aforementioned pulse durations correspond respectively to logical '1's and '0's, as illustrated in Figure 1B. Figure 1B provides an example of a differential bi-phase encoding. At the top is the clock cycle wherein t_{CLK} is the time period of the clock cycle. At the bottom is the generated current pulse with data coded into it. In order to facilitate reliable communication, the pulses are specified to have certain shape(-s). Especially, the width of each generated pulse must be accurate to ±4%.

The transfer of power is done by means of a carrier wave having a frequency in the range 110kHz -205kHz. The rectification of the power carrying wave induces significant noise harmonics on the operation frequency, especially the second harmonic.

It is mandatory to perform certain security related measurements with high accuracy. It is therefore necessary to filter the output voltage of the power receiver 6. A relatively large filtering capacitor 10 (C_{filt}) is placed at the output of the rectifier. Current modulation is achieved using a current supply 12 modulated to apply current I_{MOD}. The current supply 12 is connected to one direct current terminal of the rectifier and to earth. In use part of the modulation current (Imod) delivered by current modulator 12 flows from the filtering capacitor 10, resulting in a deterioration of the pulse shape as shown in figure 2. Eventually, as the capacitor size increases this will cause bit read errors resulting in the deterioration of the Bit Error Rate (BER) of the communication channel below an acceptable level.

A root cause for the need to filter the output voltage of the power receiver is the specification originated requirement to measure the output current of the power receiver with better than 1% accuracy. Due to this, there is a need to place a 5µF capacitor at the output of the rectifier. As a result of finite impedance seen at the output of the rectifier, the modulation current also modulates the voltage over this filtering capacitor. As a consequence of this, part of the modulation current flows from the capacitor, not through the active rectifier and eventually via the transmitter's demodulator structure. The ideal target rectangular step function waveform is shown at figure 2A. A somewhat exaggerated example of the real saw-tooth current waveform that flows through the rectifier and the TX-side demodulation circuitry as a result of waveform deterioration is shown in Figure 2B. As information is tied to pulse duration, the malformation of the shape of the current pulse will lead to demodulation errors if deviation is allowed to grow large enough. Consequently the size of the filtering capacitor is limited by the tolerable distortion of the generated current pulse. This, in turn, makes it more difficult to perform the current measurement with desired accuracy as the analogue circuitry must now tolerate higher noise level.

It is desirable to be able to increase the size of the filtering capacitor 10 while minimising degradation of the communication signal and maintaining efficient power reception at the receiver 6.

### Statement of Invention

Accordingly the present invention provides a wireless power receiver, the receiver having an inductor to receive power via an inductive couple with an independent power supply, the receiver having a rectifier in circuit with a current modulator responsive to a controller to superimpose a pulsed current signal for inductive communication with an inductively coupled power supply;

**characterised in that** the current modulator is arranged to respond to the controller to shape the signal current pulse such that the communication pulse shape seen by the secondary inductor more closely resembles a rectangular step function.

According to a second aspect of the present invention there is provided a method of signal transmission between a wireless power receiver having a secondary inductor inductively coupled to a wireless power transmitter, comprising generating a sequence of signal current pulses in the receiver circuit, characterized by the step of shaping the signal current pulses so that the effect of circuit distortion causes the shape of the signal pulse seen at the secondary inductor of the receiver to tend towards a rectangular step function.

For the sake of clarity, the secondary inductor is so named in relation to the transmission of power.

Thus according to the invention the signal current modulator generates a current pulse which has a pre-distorted shape, by comparison with the ideal rectangular step function pulse. The shape of the current pulse is "pre-distorted" in such a way that instantaneous overdrive of current pulse in the beginning of pulse compensates pulse distorting effects in the circuit, especially those which are induced by a filtering capacitor.

The shape of the current pulse may comprise an initial momentary spike value in excess of (overshooting) a nominal current pulse value, and a progressive decay towards the nominal current pulse value. The shape may be determined by sensing the distortion in real time and generating the pulse current shape accordingly. Alternatively the pulse current shape may be pre-recorded in a memory and applied by a WPC controller to the pulse current generator. The pulse may end, or the next pulse begin with a current spike below (undershooting) the nominal pulse value and then rising progressively towards the nominal value. Where the current modulator is digitally controlled the shape of the current modulation pulse may be emulated by a sequence of steps.

According to a third aspect of the present invention there is provided a wireless power receiver, the receiver having an inductor to receive power via an inductive couple with an independent power supply, the receiver having a rectifier in circuit with a current modulator responsive to a controller to superimpose a pulsed current signal for inductive communication with an inductively coupled power supply; **characterised in that** the current modulator is connected across the direct current terminals of the rectifier.

According to a fourth aspect of the present invention there is provided a wireless power receiver, the receiver having an inductor to receive power via an inductive couple with an independent power supply, a current modulator responsive to a controller to generate a pulsed current signal for inductive communication with the inductively coupled power supply; **characterised in that** the current modulator is provided by a capacitor in series with a make break switch and connected in parallel with the inductor, said switch being responsive to the controller to modulate each communication current pulse.

The fourth aspect of the invention aims to reduce efficiency losses in the power transmission which may be caused by the communication process.

The third and/or fourth aspects of the present invention may be useful independently of in combination with any other aspect of the present invention.

### BRIEF DESCRIPTION OF THE DRAWINGS

At least one embodiment of a method and apparatus for data **communication during wireless power transmission** will now be described, by way of example only, with reference to the accompanying figures: in which,
Figure 3 is a circuit diagram of a prior art transmitter and a receiver embodying the invention;
Figure 4A schematically illustrate an ideal current wave form;
Figure 4B schematically illustrates a real current waveform;
Figure 5 schematically illustrates a transient current;
Figure 6 schematically illustrates an ideal pulse with a discrete replica of the transient current;
Figure 7 schematically illustrates examples of differential bi-phase encoding;
Figure 8 is a schematic block diagram illustrating embodiments of a control and communications unit and a power conversion unit; and
Figure 9 schematically illustrates transmittal of control error messages.

### DETAILED DESCRIPTION

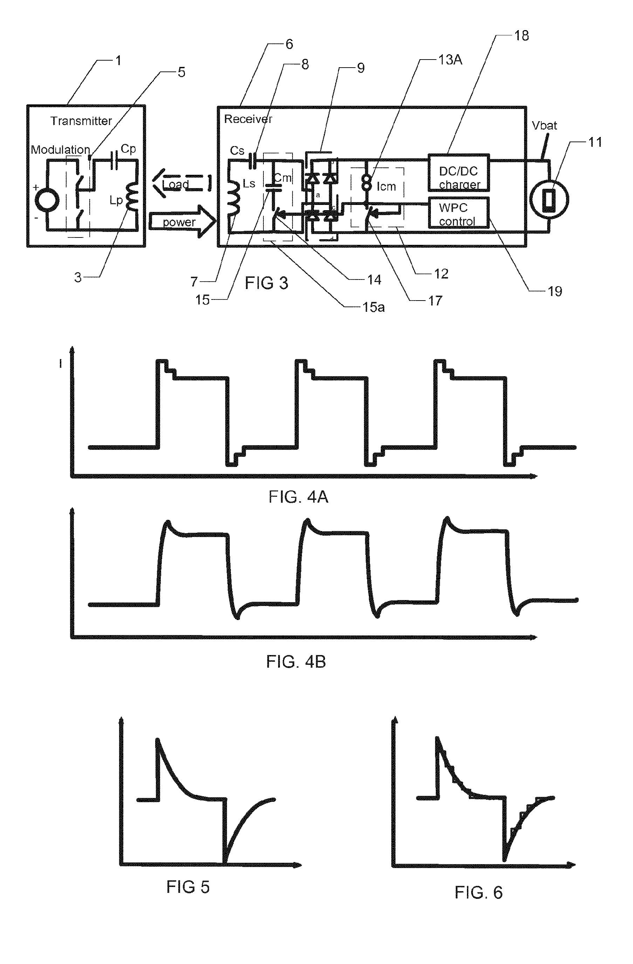

Figure 4A schematically illustrates an idealised pre-distorted current pulse and the resulting current pulse that flow towards the transmitter 1 (TX). Figure 4B shows a practical form of the signal pulse seen at the secondary inductor 7. As a result it is possible to use larger filtering capacitors than the prior art arrangement, resulting in better accuracy of measurements. Moreover, should there be other sources of error within the system, such as transients in load current, the ability to produce better shaped pulses makes the system more insensitive to other types of distortion or noise.

An example of a harmful transient current flowing through capacitor is illustrated in Figure 5. In order to compensate its impact, a pulse generating current modulator 12 is controlled by a controller 19, so that it effectively adds (superposes) a discrete replica of the transient current on top of the ideal pulse rectangular step function pulse. An example for this is shown in Figure 6. This may be done with a current Digital to Analog Converter (DAC), such as a 3-4 bit current DAC, that has suitable sampling rate. Since the MHz-range time base is available and since the duration on communication pulses is 250µs or 500µs, it is quite easy to construct such a control for a current-mode DAC that equalizes the pulses to have the desired shape. The implementation described above may necessitate the generation of bi-polar current pulses. While the pulses with positive polarity may always be generated via a current mode DAC, the pulses with negative polarity may be created by modulating the charging current of a charger. A disadvantage of this may be a negligible increase of charging time.

The conventional way to generate the pulses is to apply a resistor or a current source 12 (I_{mod}) between a DC output of the rectifier 9 (power link) and ground. This results in an immediate drop of efficiency as a part of the received power is used for communication purposes. In Figure 1B, the generation of a current is done using current source 12 (Icm). Current source 12 is connected to each direct current terminal of the rectifier 9.

The communication pulses have been specified to have a minimum amplitude of 15mA when measured at a demodulator circuit 13 of the transmitter 1. In practice the sensing of the modulated signal is usually done by placing a current measurement resistor in series with primary inductor coil 3 (Lp).

As the demodulator circuit 13 is specified to have a supply of approximately 20V, the minimum instantaneous power for communication is approximately 300mW. However, the instantaneous modulation power has to be 2-6 times this compared to specified minima to ensure sufficient signal-to-noise ratio (SNR) for demodulation. This results in an instantaneous modulation power of 600-1800mW.

During charging control, the receiver 6 is required to send one or more so called control error messages to the transmitter 1 in order to control the level of transmitted power. The time duration of the control error messages is approximately 22 ms.The time period, interval, after which these control messages have to be re-sent is at most 350 ms. In order to avoid link failures resulting from instantaneous noise spikes, these control messages have to be re-sent typically after every 100 ms. Due to the aforementioned rate requirement, communication is active approximately 6% (e.g. 22ms/372ms ≈ 6%) of the charge transfer time. In some cases the active communication time is 18% (22ms/122ms ≈ 18%). Taking into account the characteristic modulation originated scaling coefficient of 50%, the effective communication power over the charging time may vary from a theoretical minima of approximately 10mW (50% * 6% * 300mW ≈ 10mW) up to 160mW (e.g. 50% * 18% * 1800mW ≈ 160mW). Maximum charging power being 5000mW, communication may result in an estimated 3% decrease in efficiency.

Typical charging power being in the range of 3000mW, impact to efficiency may be up to 5%. Some remedy to this efficiency drop may be gained by using a reactive modulation scheme that modulates the efficiency of the link instead of active generation of these current pulses. In Figure 1B this is done using a switch 14 in series with a capacitor 15. Each of the switch 14 and capacitor 15 are arranged in parallel with the secondary inductor 7. A disadvantage of this method may be that its performance depends on load that is currently active. For example, during start-up when load is very low, the communication power is also low, resulting in unreliable start-up behaviour unless a lossy communication scheme is used. In practice, reactive schemes must be assisted by a lossy one.

The receiver 6 may combine the current pulses to be a part of the charging current. This feature is made possible by the fact that it is the duration of the current pulse that matters, not the polarity. Therefore, the pulse itself may be chosen to be a positive deviation or a negative deviation from the instantaneous nominal charging current. The receiver 6 may apply negatively polarised signal pulse, i.e. setting the charging current temporarily to a value below a nominal instantaneous charging current to accomplish the communication. However, in some embodiments a positive polarity may be used. The selection of the signal polarity may depend on other requirements of the receiver or specification.

Direct Current/Direct Current-charger 17 (DC/DC-charger) is used to perform the charging. The charger can operate in a constant current mode, where the current setting is e.g. 500mA. During communication, this charging current of 500mA is instantaneously reconfigured to a value of 400mA so that the duration of this new setting is either 250µs or 500µs, depending on the data bit the system needs to send. After this, a first bit is sent, and the charging current is set to the original value of 500mA for the period that corresponds to the next bit that is to be sent. This way the current is set to vary periodically between 400mA and 500mA with a duration pattern corresponding the transmitted bit sequence until the last bit of message sequence is sent.

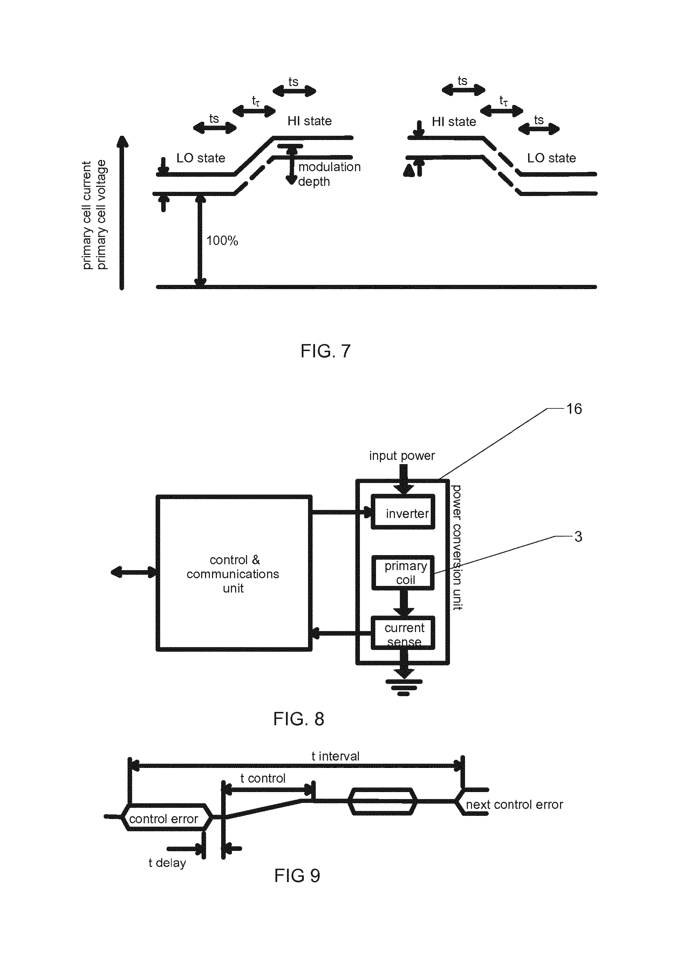

Figure 6 gives an example for the current waveform resulting from the used bi-phase encoding of a signal. The top line of Figure 7 is the clock cycle illustrated, wherein t_{CLK} is the time period of the clock cycle. The bottom line of Figure 7 illustrates the generated current pulse with data coded into it.

A detailed description of the shape of the current pulse is given below with reference to Figure 1C. In some embodiments, the modulation depth has to be at least 15mA, and the amplitude variation Δ has to be below 8mA. In the example, the current value in the high state (HI state) is the aforementioned 500mA whereas in the low state (LO state) it is 400mA.

As the communication does not sink any current to ground but merely modulates the charging current, the net impact on efficiency is in practice zero. As the charging power now is actively modulated, the most significant use-case disadvantage is the slight increase of charging time.

In a typical case the Input voltage of a charger is 6V. Therefore the instantaneous modulation power resulting from a 100mA current modulation is thus 600mW, well above the specification limit. This value may be set to correct one simply by using suitable modulation depth.

There is a dependency between minimum charging current that occurs at the end of emulated CV-mode and the usable modulation depth. Note, that the smallest value of the charging current that may be instantaneously set for communication purposes is zero. As the typical value of this is 100-200mA.

The improved efficiency may advantageously minimize the power dissipation within an integrated circuit (IC) such as a chip which results in lower operation temperature. This is particularly important as an integrated circuit is often placed or used where there is no natural route for the heat to escape. For example, embodiments may be implemented in an enclosure of a wireless device, such as in a cellular phone.

The receiver 6 may be implemented in an integrated circuit, the receiver may be provided in a communication device or similar, usually portable device. The transmitter may also be implemented as an integrated circuit.

The communication device may be a mobile terminal or a wireless terminal, a mobile phone, a computer such as e.g. a laptop, a tablet pc such as an iPad^{™}, a Personal Digital Assistant (PDA) or any other radio network unit capable of communication over a radio link in a cellular communications network.

Although the description above contains many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein. A wireless charger receiver or a wireless charger transmitter may address one or more technical problems and achieve one or more objectives expressly disclosed herein, or may be found to address technical problems or objectives revealed by subsequent analysis or experimentation.

When using the word "comprise" or "comprising" it shall be interpreted as non-limiting, in the meaning of consist at least of.

When using the word action/actions it shall be interpreted broadly and not to imply that the actions have to be carried out in the order mentioned. Instead, the actions may be carried out in any suitable order other than the order mentioned. Further, some action/actions may be optional.

## Claims

1. A wireless power receiver (6), the receiver (6) having a secondary inductor (7) to receive power via an inductive couple with an independent power supply (1), the receiver having a rectifier (9), in circuit with a current modulator (12) responsive to a controller (19) to superimpose a pulsed current signal for inductive communication with an inductively coupled power supply;
**characterised in that** the current modulator (12) is adapted to shape the signal current pulse in such a way that after circuit distortion, the communication pulse shape seen by the secondary inductor more closely resembles an ideal rectangular step function.

2. A wireless power receiver according to claim 1 wherein the shape of the current pulse is determined by sensing a harmful transient current shape and adding the transient current shape to the ideal rectangular step function pulse shape.

3. A wireless power receiver according to claim 2 wherein the shape of the signal current pulse consists of an initial positive or negative spike followed by a progressive change to the ideal rectangular step function current.

4. A wireless power receiver according to any one of the preceding claims wherein the rectifier has positive and negative direct current output terminals, and the current modulator (12) comprises a current source (13A) connected across the direct current terminals.

5. A wireless power receiver according to claim 4 wherein the current modulator (12) includes a switch (17) in series with the current source (13A) to interrupt the connection between the terminals of the rectifier (9).

6. A wireless power receiver according to claim 5 wherein the switch is actuated by a controller to modulate the instantaneous current delivered by the current source (13A).

7. A wireless power receiver according to any one of the preceding claims wherein the current modulator (15a) is provided by a capacitor (15) in series with a make break switch (14) and connected in parallel with the inductor (7), said switch being responsive to the controller to modulate each communication current pulse by interrupting the connection.

8. A wireless power receiver according to any one of the preceding claims in combination with a device and arranged to deliver charge to an accumulator of the device.

9. A wireless power receiver according to claim 8 wherein the device is a mobile device.

10. A method of signal transmission between a wireless power receiver (6) having a receiver circuit including an inductor (7) inductively coupled to a wireless power transmitter (1), comprising:
generating a sequence of signal current pulses in the receiver circuit, **characterized by** the step of shaping each signal current pulse so that the effect of circuit distortion causes the shape of the pulse seen at the inductor (7) of the receiver more closely resembles a rectangular step function.

11. A method according to claim 10 comprising sensing the shape of a transient current in the filter capacitor,
adding the shape of the transient current to the shape of an ideal rectangular step function current to generate a signal pulse shape and
generating a current pulse according to the signal current pulse shape.

12. A method according to claim 10 or 11 wherein the signal current pulse is applied across the direct current terminals of a rectifier (9) in the receiver (6).

13. A method according to any one of claims 10 to 12 wherein the signal current pulse is induced by controlled intermittent interruption of the connection of a capacitance (15) in connected in parallel with the inductor (7).

14. A wireless power receiver (6), the receiver (6) having an inductor (7) to receive power via an inductive couple with an independent power supply (1), the receiver having a rectifier (9) including a filter capacitor, in circuit with a current modulator (12) responsive to a controller to superimpose a pulsed current signal for inductive communication with an inductively coupled power supply (1);
**characterised in that** the current modulator (12) is connected across the direct current terminals of the rectifier (9).

15. A wireless power receiver (6), the receiver (6) having an inductor (7) to receive power via an inductive couple with an independent power supply (1), a current modulator responsive to a controller (19) to generate a pulsed current signal for inductive communication with the inductively coupled power supply (1); **characterised in that** the current modulator is provided by a capacitor (15) in series with a make break switch (14) and connected in parallel with the inductor (7), said switch being responsive to the controller to modulate each communication current pulse.

## Amended claims

### Amended claims in accordance with Rule 137(2) EPC.

**1.** A wireless power receiver (6), the receiver (6) having a secondary inductor (7) to receive power via an inductive couple with an independent power supply (1), the receiver having a rectifier (9), in circuit with a current modulator (12) responsive to a controller (19) to superimpose a pulsed current signal for inductive communication with an inductively coupled power supply;
**characterised in that** the current modulator (12) is adapted to shape the signal current pulse such that after circuit distortion the communication pulse shape seen by the secondary inductor more closely resembles an ideal rectangular step function.

**2.** A wireless power receiver according to claim 1 wherein the shape of the current pulse is determined by sensing a harmful transient current shape and adding the transient current shape to the ideal rectangular step function pulse shape.

**3.** A wireless power receiver according to claim 2 wherein the shape of the signal current pulse consists of an initial positive or negative spike followed by a progressive change to the ideal rectangular step function current.

**4.** A wireless power receiver according to any one of the preceding claims wherein the rectifier has positive and negative direct current output terminals, and the current modulator (12) comprises a current source (13A) connected across the direct current terminals.

**5.** A wireless power receiver according to claim 4 wherein the current modulator (12) includes a switch (17) in series with the current source (13A) to interrupt the connection between the terminals of the rectifier (9).

**6.** A wireless power receiver according to claim 5 wherein the switch is actuated by a controller to modulate the instantaneous current delivered by the current source (13A).

**7.** A wireless power receiver according to any one of the preceding claims wherein the current modulator (15a) is provided by a capacitor (15) in series with a make break switch (14) and connected in parallel with the inductor (7), said switch being responsive to the controller to modulate each communication current pulse by interrupting the connection.

**8.** A wireless power receiver according to any one of the preceding claims in combination with a device and arranged to deliver charge to an accumulator of the device.

**9.** A wireless power receiver according to claim 8 wherein the device is a mobile device.

**10.** A method of signal transmission between a wireless power receiver (6) having a receiver circuit including an inductor (7) inductively coupled to a wireless power transmitter (1), comprising:
generating a sequence of signal current pulses in the receiver circuit,
**characterized by** the step of shaping each signal current pulse so that the effect of circuit distortion causes the shape of the pulse seen at the inductor (7) of the receiver more closely resembles a rectangular step function.

**11.** A method according to claim 10 comprising sensing the shape of a transient current in the filter capacitor,
adding the shape of the transient current to the shape of an ideal rectangular step function current to generate a signal pulse shape and
generating a current pulse according to the signal current pulse shape.

**12.** A method according to claim 10 or 11 wherein the signal current pulse is applied across the direct current terminals of a rectifier (9) in the receiver (6).

**13.** A method according to any one of claims 10 to 12 wherein the signal current pulse is induced by controlled intermittent interruption of the connection of a capacitance (15) connected in parallel with the inductor (7).
